# EUROPÄISCHE PATENTSCHRIFT

(11) **EP 4 314 631 B1**
(45) Veröffentlichungstag und Bekanntmachung des Hinweises auf die Patenterteilung: **26.08.2026**
(21) Anmeldenummer: 22714982.0
(22) Anmeldetag: 30.03.2022
(51) Int. Cl.: F17C 13/12

(54) **SYSTEM ZUR ÜBERPRÜFUNG DER FUNKTIONSTÜCHTIGKEIT EINES ÜBERDRUCKVENTILS**
SYSTEM FOR CHECKING THE OPERATIONAL RELIABILITY OF A PRESSURE RELIEF VALVE
SYSTÈME DE CONTRÔLE DE LA FIABILITÉ DE FONCTIONNEMENT D'UNE SOUPAPE DE SURPRESSION

(30) Priorität: 01.04.2021 AT 5006321 U
(43) Veröffentlichungstag der Anmeldung: 07.02.2024
(73) Patentinhaber: Cryoshelter LH2 GmbH, 8143 Dobl-Zwaring (AT); Cryoshelter BioLNG GmbH, 8143 Dobl-Zwaring (AT)
(72) Erfinder: REBERNIK, Matthias, 8143 Dobl-Zwaring (AT)
(74) Vertreter: Schwarz & Partner Patentanwälte GmbH
(86) Internationale Anmeldenummer: PCT/AT2022/060098
(87) Internationale Veröffentlichungsnummer: WO 2022/204745

(56) Entgegenhaltungen:
- CN-A- 107 726 039
- DE-A1- 102019 125 184
- KR-B1- 101 067 234
- KR-Y1- 200 321 348
- US-A1- 2020 149 683

## Beschreibung

Die Erfindung betrifft ein System umfassend einen Kryobehälter zur Lagerung von Kryofluid und ein Anschlusssystem mit zumindest einer mit dem Kryobehälter verbundenen Anschlussleitung, welche in einem Überdruckventil mündet, wobei ein Rückschlagventil in der Anschlussleitung vorgesehen ist, welches dazu ausgebildet ist, einen Fluidstrom in Richtung des Kryobehälters zu verhindern.

Gemäß dem Stand der Technik können verflüssigte Gase in Behältern ("Kryobehältern") gespeichert werden, um diese als Kraftstoff für beispielsweise einen Motor zu lagern. Kryobehälter lagern Gase in tiefkalt verflüssigter Form. Gase wie z.B. Methan oder Wasserstoff weisen in ihrer verflüssigten Form eine 600-mal bis 800-mal höhere Dichte auf als im Normzustand (Umgebungstemperatur und Druck). Dieser Dichteanstieg ist der Nutzen der Verflüssigung und gleichzeitig ein Risiko in der Absicherung von Kryobehältern, denn die vollständige Erwärmung eines vollgefüllten Kryobehälters und damit ein Verdampfen des verflüssigten Gases würde zu Drücken von weit über 1.000 bar bis hin zu 2.000 bar führen. Derartige Drücke würden jedenfalls die mechanische Belastbarkeit des Druckbehälters bei weitem übersteigen.

Der im Betrieb zulässige Höchstdruck ("maximum allowable working pressure", MAWP) von z.B. 16 barü wird daher mit einem ersten Überdruckventil (First Pressure Relief Valve - 1.PRV) abgesichert, sodass dieser Druck im Betrieb niemals überschritten wird. Als zusätzliche Sicherheit - für den Fall einer Fehlfunktion des 1. PRV - wird ein zweites Überdruckventil (2. PRV) vorgesehen, welches erst bei einem höheren Druck als das 1. PRV auslöst, z.B. bei 22 barü. Beide Überdruckventile müssen in ständiger Verbindung mit dem Innentank stehen und dürfen durch keine Ventile vom Innentank ersatzlos getrennt werden - ein befüllter Innentank sollte zu jedem Zeitpunkt mit zwei Überdruckventilen abgesichert sein.

Die dafür erforderlichen Behälterwandstärken und Designprinzipien sowie das Verhältnis von erstem Druck und zweitem Druck wird in verschiedenen Normen festgelegt, z.B. ISO 21029. Grundsätzlich ist den Normen gemeinsam, dass der MAWP prinzipiell beliebig oft erreicht werden kann, während der Druck des 2. PRV lediglich einmal bzw. wenige Male zur Kontrolle unmittelbar nach der Fertigung des Innentanks erreicht werden soll.

Die Überdruckventile sind damit die zentrale Sicherheitsvorrichtung für Kryobehälter und deren Funktion muss regelmäßig überprüft werden. In der Regel wird dafür der Behälter entleert und die Ventile werden demontiert und für sich als Komponenten überprüft, bzw. werden neue Überdruckventile montiert.

Die Entleerung eines Tanks ist zeitaufwändig und der Inhalt ohne aufwändiges Equipment nicht weiter verwendbar und daher verloren. Die damit verbundenen Kosten sind erheblich. Das Ziel der Erfindung ist es, eine Überprüfung bei vollem Tank zu ermöglichen.

Eine Überprüfung des 1. PRV wäre auch bei vollem Tank durch natürlichen Druckanstieg oder durch aktive Druckerhöhung von außen im gesamten Tank möglich, da der Innentank für diesen Druck ausgelegt ist. Ein Überprüfen des 2. PRV hingegen würde zumindest ein temporäres Deaktivieren des 1. PRV einerseits und gleichzeitig eine Druckerhöhung im Tank auf einen Druck über den MAWP erfordern. Eine wenn auch nur temporäre Deaktivierung eines der Überdruckventile ist sicherheitskritisch. Die mehrmalige Erhöhung des Drucks über den MAWP ist gegen den Sinn der Auslegungskriterien der Druckbehälternormen und daher zu vermeiden. Diese beiden Gründe sprechen gegen eine Überprüfung beider Überdruckventile bei befülltem Tank.

Ein Lösungsansatz wäre, den Druckbehälter so auszulegen, dass der Druck des 2. PRV plus eine gewisse Prüftoleranz noch innerhalb des MAWP des Innentanks liegen. Anhand der oben genannten Beispiele würde das bedeuten: Design-MAWP liegt bei z.B. 24 bar, für den Betrieb wird der Tank aber weiterhin mit einem 1. PRV bei 16 barü und einem 2. PRV bei 22 barü abgesichert. Diese Ausführung würde zumindest eine mehrmalige Druckerhöhung im Tank auf bis zu 22 barü zur Überprüfung des 2. PRV ermöglichen. Das Problem einer temporären Deaktivierung des 1. PRV wäre nach wie vor überzeugend zu lösen. Ein wesentlicher Nachteil dieses Lösungsansatzes ist allerding die zusätzliche Innentank-Wandstärke, die infolge des erhöhten MAWP erforderlich wird und für die den Beispielen zugrunde gelegten Tankgeometrien und -drücke eine ca. 60% Erhöhung des Materialeinsatzes für den Innentank bedeutet.

Eine alternative Lösung zum Überprüfen der Überdruckventile ist beispielsweise aus der EP 3 262 334 B1 bekannt, bei der zwei Überdruckventile parallelgeschaltet werden. Mittels eines Drehmechanismus kann der Behälteranschluss entweder mit beiden Überdruckventilen oder nur mit einem der Überdruckventile verbunden werden. Wenn eines der Überdruckventile ausgewechselt werden soll, kann der Drehmechanismus daher derart eingestellt werden, dass nur eines der Überdruckventile mit dem Behälteranschluss verbunden ist, sodass das andere Überdruckventil ausgetauscht werden kann. Das entnommene Überdruckventil kann danach in einer externen Prüfvorrichtung getestet werden.

Derartige Verfahren mit zwei auswechselbaren Überdruckventilen weisen jedoch auch Nachteile auf. Beispielsweise benötigt der Mechanismus ein kompliziertes Schaltsystem, damit sichergestellt ist, dass ein Überdruckventil nur dann entnommen werden kann, wenn das andere Überdruckventil mit dem Kryobehälter verbunden ist. Der Entwicklung dieser Erfindung liegt überdies die Erkenntnis zugrunde, dass mit den zwei parallelgeschalteten Überdruckventilen nicht alle Fehlerquellen überprüft werden können, wie zum Beispiel der korrekte Sitz des Überdruckventils in seinem Anschluss.

Aus der US 4548067 ist ein Ventilanschlussbauteil für Überdruckventile von regulären, d.h. nicht isolierten, Druckbehältern und Pipelines bekannt. Dieses Ventilanschlussbauteil eignet sich jedoch nicht für den Einsatz bei Kryobehältern, da das Ventilanschlussbauteil unmittelbar auf den Druckbehälter bzw. die Pipeline montiert werden muss, was bei Kryobehältern aufgrund der Isolation nicht möglich scheint. Auch umfasst die Testventilanordnung der US 4548067 Dichtringe aus Fluorcarbon, die für kryogene Temperaturen nicht geeignet sind.

Die Offenbarungen KR 200 321 348 Y1 und KR 101 067 234 B1 betreffen Sicherheitsventile, die jedoch nicht für Kryofluide ausgelegt sind. Die Sicherheitsventile umfassen einerseits ein Überdruckventil und andererseits einen Testanschluss, um das Überdruckventil zu testen. Besonders nachteilig ist hierbei, dass ein Absperrventil vor dem Sicherheitsventil geschlossen werden muss, bevor der Testvorgang gestartet wird, sodass das Überdruckventil während des Testvorganges nicht mit dem Rest des Systems verbunden ist.

Die Schrift CN 107 726 039 A offenbart einen Kryobehälter und ein an diesen angeschlossenes Sicherheitsventil mit einem Überdruckventil. Das Sicherheitsventil ermöglicht zusätzlich einen Fluidstrom von einer externen Quelle in den Kryobehälter und umfasst hierfür einen weiteren Eingang.

Es ist die Aufgabe der Erfindung, ein verbessertes System zum Überprüfen von Überdruckventilen für Kryobehälter zu schaffen.

Diese Aufgabe wird durch ein System umfassend einen Kryobehälter zur Lagerung von Kryofluid und ein Anschlusssystem mit zumindest einer mit dem Kryobehälter verbundenen Anschlussleitung gelöst, welche in einem Überdruckventil mündet, wobei ein Rückschlagventil in der Anschlussleitung vorgesehen ist, welches dazu ausgebildet ist, einen Fluidstrom in Richtung des Kryobehälters zu verhindern, wobei das System ferner eine Testleitung umfasst, welche zwischen dem Rückschlagventil und dem Überdruckventil an die Anschlussleitung anschließt und in einem Testanschluss für eine Testvorrichtung zur Bereitstellung eines druckbeaufschlagten Testfluids mündet, wobei ein Ventil in der Testleitung vorgesehen ist, welches dazu ausgebildet ist, einen Fluidstrom in Richtung des Testanschlusses zu verhindern und einen Fluidstrom in Richtung des Überdruckventils zu ermöglichen, um dessen Funktionstüchtigkeit zu überprüfen.

Erfindungsgemäß wird zwischen dem Überdruckventil und dem Tank ein zum Überdruckventil hin öffnendes Rückschlagventil, d.h. Check-Valve, angeordnet und zwischen diesem Rückschlagventil und dem Überdruckventil wird ein Testanschluss angeordnet. Dieser Testanschluss erlaubt ein Anschließen einer Testleitung, während der Tank unter Druck steht. Der Testanschluss kann daher beispielsweise selbst als ein zum Überdruckventil hin öffnendes Rückschlagventil mit einem atmosphärenseitigen Schraubverschluss ausgeführt sein.

Somit kann das Auslösen bei Solldruck sowohl des 1. PRV als auch des 2. PRV bei befülltem Tank und ohne Druckerhöhung im Tank selbst überprüft werden, womit wesentlich Zeit- und Kostenersparnisse sowohl des Behälters selbst als auch bei dessen Betrieb erreicht werden.

Das erfindungsgemäße System ermöglicht eine optimale Verbindung der aus dem Stand der Technik bekannten Vorteile. Einerseits kann das Überdruckventil unmittelbar in seinem montierten Zustand am Kryobehälter überprüft werden und muss insbesondere zum Überprüfen nicht abgenommen werden. Dadurch kann bei dem Testverfahren des Überdruckventils beispielsweise auch der korrekte Sitz des Überdruckventils in seinem Anschluss mitberücksichtigt werden.

Besonders ist bei dem erfindungsgemäßen System insbesondere, dass das Überdruckventil beim Testen nicht ausgebaut werden muss, wobei der für das Testverfahren benötigte Überdruck jedoch nicht über eine Erhöhung des Drucks im Kryobehälter erfolgen muss. Durch das permanente Bereitstellen des Testanschlusses kann zu jedem Zeitpunkt eine Testvorrichtung wie eine Pumpe oder Druckgasflasche an den Testanschluss angeschlossen werden, und die Funktionstüchtigkeit des Überdruckventils kann überprüft werden, ohne den Überdruck im Kryobehälter zu erhöhen und ohne das Überdruckventil zu entnehmen. Überdies kann die Testvorrichtung Testfluid wie Luft oder inertes Gas wie Stickstoff benutzen, um das Überdruckventil zu testen, wodurch kein Kryofluid aus dem Kryobehälter für Testversuche verschwendet werden muss.

Gemäß der Erfindung ist das Ventil ein Rückschlagventil oder ein Quetschventil.

Das Rückschlagventil hat den Vorteil, dass es automatisch öffnet, sobald Druck am Testanschluss angelegt wird. Das Quetschventil hat den Vorteil, dass der Testanschluss und das Ventil in einer Komponente vereinigt werden können und das Ventil nur öffnet, wenn eine geeignete Testvorrichtung zum Öffnen des Quetschventils angeschlossen wird. Unter einem Quetschventil wird beispielsweise ein Ventil verstanden, das automatisch öffnet, wenn ein Anschluss der Testvorrichtung in dieses eingeführt wird, und automatisch schließt, wenn der Anschluss der Testvorrichtung aus diesem herausgenommen wird. Sowohl das Rückschlagventil als auch das Quetschventil haben in der Anwendung für Kryofluide enorme Sicherheitsvorteile, da das Austreten von Kryofluid durch die Verwendung dieser Ventilart auch bei irrtümlicher oder fahrlässiger Bedienung verlässlich verhindert wird. Alternativ könnte das Ventil auch ein Handventil sein, wobei dies jedoch weniger bevorzugt ist, da eine manuelle Betätigung stets Sicherheitsbedenken bringt. Ein Handventil könnte beispielsweise offengelassen werden, oder unabsichtlich nicht vollständig geschlossen werden, was ein großes Risiko mit sich bringt, insbesondere wenn das Kryofluid Wasserstoff ist. Das Handventil hat jedoch den Vorteil, dass der Testvorgang besser reguliert und beispielsweise auch manuell abgebrochen werden kann.

Weiters ist bevorzugt, wenn der Auslösedruck des Überdruckventils über dem maximal zulässigen Arbeitsdruck des Kryobehälters bzw. über dem maximalen Betriebsdruck des Kryobehälters liegt. Dies ist deshalb bevorzugt, da derartige Überdruckventile üblicherweise nicht durch eine Druckerhöhung im Kryobehälter überprüft werden könnten bzw. sollen.

In einer weiteren bevorzugten Ausführungsform ist eine weitere Anschlussleitung an die erstgenannte Anschlussleitung angeschlossen oder in den Kryobehälter geführt, wobei die weitere Anschlussleitung in einem zweiten Überdruckventil mündet, das bei einem anderen Auslösedruck als das erstgenannte Überdruckventil auslöst. Dadurch wird eine Sicherung für den Fall geschaffen, dass eines der Überdruckventile nicht funktioniert. Wenn die weitere Anschlussleitung an die erstgenannte Anschlussleitung angeschlossen ist, hat dies den weiteren Vorteil, dass nur eine einzige Leitung durch den Kryobehälter geführt werden muss, wobei weiterhin beide Überdruckventile während des Betriebs überprüfbar sind. Dieser Vorteil ist spezifisch für Kryobehälter, da jeder Anschluss einer Leitung an den Kryobehälter mit einem Verlust an Isolationsgüte einhergeht. Es kommt somit zu keiner Verdopplung der eingangs erwähnten Anschlussleitung mit Überdruckventil, sondern zu einem Synergieeffekt, da zwei Überdruckventile bei nur einer Anschlussstelle an den Kryobehälter im Betrieb überprüfbar sind. Dies wäre bei einem System wie aus der EP 3 262 334 B1 nicht möglich, da hier pro Überdruckventil eine Anschlussstelle an den Kryobehälter gefordert wird.

Das zweite Überdruckventil kann auf zwei Arten überprüft werden. In der ersten Variante kann ein zweites Rückschlagventil in der weiteren Anschlussleitung vorgesehen sein, welches dazu ausgebildet ist, einen Fluidstrom in Richtung des Kryobehälters zu verhindern und das System kann ferner eine weitere Testleitung umfassen, welche zwischen dem weiteren Rückschlagventil und dem zweiten Überdruckventil an die weitere Anschlussleitung anschließt und in einem weiteren Testanschluss für die Testvorrichtung oder eine weitere Testvorrichtung zur Bereitstellung des genannten oder eines weiteren druckbeaufschlagten Testfluids mündet, wobei ein weiteres Ventil in der weiteren Testleitung vorgesehen ist, welches dazu ausgebildet ist, einen Fluidstrom in Richtung des weiteren Testanschlusses zu verhindern und einen Fluidstrom in Richtung des zweiten Überdruckventils zu ermöglichen, um dessen Funktionstüchtigkeit zu überprüfen. In der zweiten Variante kann die Testleitung auch an die weitere Anschlussleitung anschließen oder die weitere Anschlussleitung kann zwischen dem Rückschlagventil und dem ersten Überdruckventil an die erstgenannte Anschlussleitung anschließen. Beide Möglichkeiten zur Überprüfung können erfindungsgemäß durchgeführt werden, ohne dass der Druck im Kryobehälter selbst erhöht werden müsste.

Weiters bevorzugt ist die Anschlussleitung zwischen einer Anschlussstelle an den Kryobehälter und dem Rückschlagventil zumindest teilweise, bevorzugt vollständig, als Rohrleitung ausgebildet ist. Dadurch müssen sich die Ventile nicht unmittelbar neben dem Kryobehälter befinden bzw. können die Ventile an einer Stelle angeordnet werden, die von der Durchführung durch den Kryobehälter entfernt ist. Dies ist insbesondere für Kryobehälter bzw. einer Anordnung an einem Fahrzeug vorteilhaft, da die Ventile vom Kryobehälter entkoppelt werden können, was thermische Vorteile und eine geringere Vibrationsübertragung bei einer Fahrt mit sich bringt.

Weiters bevorzugt weist der Kryobehälter einen Innentank und einen Außenbehälter auf, wobei der Außenbehälter den Innentank vollständig mit Abstand umgibt und eine Vakuumisolation zwischen dem Außenbehälter den Innentank hergestellt ist, wobei die Anschlussleitung sowohl den Innentank als auch den Außenbehälter durchsetzt. Derartige Kryobehälter eignen sich besonders für die Lagerung von Kryofluid, insbesondere Kryobehälter an Fahrzeugen.

In einer bevorzugten Ausführungsform betrifft die Erfindung somit ein Fahrzeug mit einem Kryobehälter in einer der vorgenannten Ausführungsformen, welcher weiters bevorzugt auf einem Fahrzeugrahmen des Fahrzeugs montiert ist.

In einem weiteren Aspekt betrifft die Erfindung ein Verfahren zum Überprüfen der Funktionstüchtigkeit des Überdruckventils in einem System der vorgenannten Ausführungsformen, wobei die Testvorrichtung an den Testanschluss angeschlossen wird und Testfluid mit einem Testdruck an die Testleitung anlegt, der insbesondere über einem Druck im Kryobehälter liegen kann. Dieses Verfahren weist die eingangs für das System erläuterten Vorteile auf.

Besonders vorteilhaft ist bei dem vorgenannten Verfahren, wenn die Testvorrichtung das Testfluid mit einem steigenden, bevorzugt stetig steigenden, Druck an die Anschlussleitung anlegt und der Druck aufgezeichnet wird, an dem das Überdruckventil auslöst. Dadurch kann genau bestimmt werden, bei welchem Druck das Überdruckventil auslöst. Alternativ könnte auch nur der zu testende Druck knapp über und/oder knapp unter dem zu erwarteten Auslösedruck, d.h. einem nominellen Auslösedruck des Überdruckventils, an die Anschlussleitung angelegt werden, um die Funktionstüchtigkeit zu überprüfen.

Vorteilhafte und nicht einschränkende Ausführungsformen der Erfindung werden nachfolgend anhand der Zeichnungen näher erläutert.
Figur 1 zeigt ein erfindungsgemäßes System zur Überprüfung der Funktionstüchtigkeit eines Überdruckventils.
Figur 2 zeigt ein erfindungsgemäßes System zur Überprüfung der Funktionstüchtigkeit von zwei Überdruckventilen mit weit Testanschlüssen.
Figur 3 zeigt ein erfindungsgemäßes System zur Überprüfung der Funktionstüchtigkeit von zwei Überdruckventilen mit einem Testanschluss.

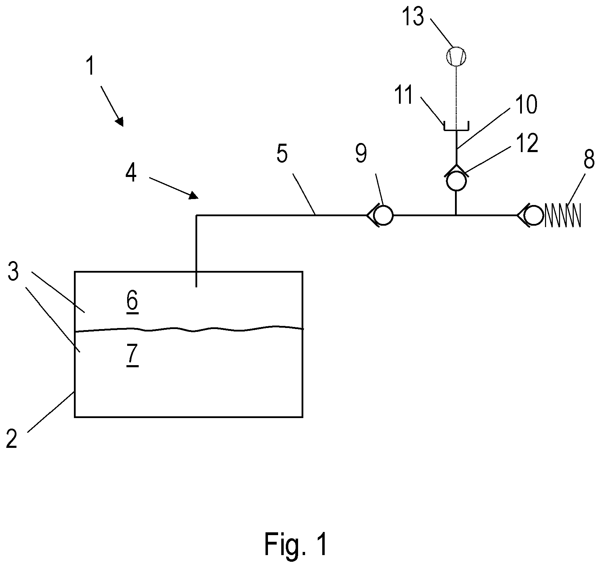

Figur 1 zeigt ein System 1 umfassend einen Kryobehälter 2 zur Lagerung von Kryofluid 3. Der Kryobehälter 2 dieses Systems 1 kann beispielswiese an einem nicht weiter dargestellten Fahrzeug montiert sein, wobei das im Kryobehälter 2 gelagerte Kryofluid 3 als Kraftstoff für das Fahrzeug verwendet und beispielsweise einem Motor zugeführt werden kann. In anderen Ausführungsformen könnte der Kryobehälter jedoch auch in anderen Einsatzgebieten vorgesehen werden.

Das im Kryobehälter 2 gelagerte Kryofluid kann beispielsweise Wasserstoff sein, sodass der Kryobehälter 2 ein Wasserstoffbehälter ist, oder das Kryofluid kann LNG (Liquefied Natural Gas) sein, sodass der Kryobehälter 2 ein LNG-Behälter ist. Je nach Kryofluid ist der Kryobehälter 2 somit dazu ausgelegt, Kryofluid bei Temperaturen von beispielsweise unter 150 Kelvin, im Fall von Wasserstoff sogar von unter 50 Kelvin oder unter 30 Kelvin oder im Wesentlichen 20 Kelvin, zu lagern. Je nach Anwendung könnte der Kryobehälter 2 beispielsweise zur Lagerung von sLH2 (subcooled liquid hydrogen) oder CcH2 (cryocompressed hydrogen) ausgebildet und damit auch für entsprechende hohe Drücke ausgelegt sein, z.B. für Maximaldrücke zwischen 5 bar und 350 bar.

Figur 1 zeigt weiters ein an den Kryobehälter 2 angeschlossenes Anschlusssystem 4. Das Anschlusssystem 4 ist beispielsweise ein Entnahmesystem, über welches Kryofluid 3 vom Kryobehälter 2 entnommen und z.B. dem genannten Motor zugeführt wird. Es könnte sich aber auch um ein anderes Anschlusssystem 4 an den Kryobehälter 2 handeln, beispielsweise ein Befüllsystem, ein Ventsystem zum manuellen Entlüften des Kryobehälters 2 oder ein dediziertes Sicherheitssystem.

Das Anschlusssystem 4 weist eine Anschlussleitung 5 auf, welche bevorzugt Kryofluid 3 in Gasphase 6 aus dem Kryobehälter 2 entnimmt. Zu diesem Zweck kann die Anschlussleitung 5 beispielsweise an einem oberen Drittel des Kryobehälters 2 anschließen, gesehen im Betriebszustand des Kryobehälters 2. Es ist jedoch auch möglich, dass die Anschlussleitung 5 Kryofluid 3 in Flüssigphase 7 entnimmt, und beispielsweise ein Verdampfer in der Anschlussleitung 5 angeordnet ist.

Die Anschlussleitung 5 des Anschlusssystems 4 mündet in einem Überdruckventil 8 und weist zwischen der Anschlussstelle an den Kryobehälter 2 und dem Überdruckventil 8 ein Rückschlagventil 9 auf. Das Rückschlagventil 9 ermöglicht einen Fluidfluss aus dem Kryobehälter 2 zum Überdruckventil 8, jedoch nicht vom Überdruckventil 8 zum Kryobehälter 2, d.h. es verhindert einen Fluidstrom in Richtung des Kryobehälters 2.

Das Überdruckventil 8 sperrt einen Fluidfluss, wenn der Druck in der Anschlussleitung 5 unter einem Schwellwert liegt und öffnet, wenn der Druck in der Anschlussleitung 5 den Schwellwert überschreitet. Dadurch nimmt das Überdruckventil 8 eine überaus kritische Sicherheitsrolle ein, denn es verhindert, dass der Druck im Kryobehälter 2 zu groß wird und der Kryobehälter 2 dadurch beschädigt wird. Der genannte Schwellwert des Überdruckventils 8 liegt beispielsweise bei einem sogenannten maximal zulässigen Arbeitsdruck ("maximum allowable working pressure", MAWP) des Kryobehälters 2 und ist von den Eigenschaften des Kryobehälters 2 abhängig. Dieser maximal zulässige Arbeitsdruck liegt üblicherweise bei 16 bar, sodass das Überdruckventil 8 dazu ausgebildet sein kann, ab einem Druck von 16 bar zu öffnen. In der Regel kann der Schwellwert des Überdruckventils 8 jedoch beliebig gewählt werden und kann von den äußeren Umständen bzw. dem Einsatzzweck abhängig gemacht werden.

Da dieses Überdruckventil 8 so kritisch für die Sicherheit des Systems 1 ist, soll dieses in regelmäßigen Abständen überprüft werden. Hierin wird vorgeschlagen, das Überdruckventil 8 für das Testverfahren im Anschlusssystem 4 eingebaut zu lassen und eine Testleitung 10 vorzusehen, welche zwischen dem Rückschlagventil 9 und dem Überdruckventil 8 an die Anschlussleitung 5 angeschlossen ist. Hierfür kann die Anschlussstelle in der Anschlussleitung 5 zwischen dem Rückschlagventil 9 und dem Überdruckventil 8 beispielsweise ein einfaches T-Stück aufweisen.

Die Testleitung 10 mündet in einem Testanschluss 11, der in der Regel beliebig ausgestaltet werden kann und beispielsweise im Betriebszustand, d.h. wenn das Überdruckventil 8 nicht getestet werden soll, mit einer Blindverschraubung verschlossen sein.

Zwischen dem Testanschluss 11 und der Anschlussstelle an die Anschlussleitung 5 weist die Testleitung 10 ein Ventil 12 auf, das beispielsweise wie dargestellt ein Rückschlagventil ist. Alternativ kann das Ventil 12 auch ein Quetschventil sein, welches ebenso nicht manuell betätigt werden kann, sondern nur durch Einführen bzw. Aufbringen eines Anschlusses der Testvorrichtung. In wieder anderen Ausführungsformen könnte das Ventil 12 auch ein manuell betätigbares Handventil oder jedes andere Ventil sein, das einen Fluidfluss in Richtung des Testanschlusses 11 verhindern und einen Fluidfluss in Richtung des Überdruckventils 8 ermöglichen kann. Der Testanschluss 11 und das Ventil können wie dargestellt gesondert ausgeführt werden. Alternativ dazu können die beiden Komponenten in einem Bauteil vereint sein, insbesondere wenn das Ventil 12 ein Quetschventil ist und zum Öffnen ein durch den Testanschluss 11 geführtes Gegenstück aufnehmen muss.

Das Verfahren zum Überprüfen der Funktionstüchtigkeit des Überdruckventils 8 kann nun wie folgt ausgeführt werden. Eingangs wird eine Testvorrichtung 13 zur Bereitstellung eines druckbeaufschlagten Testfluids, beispielsweise eine Pumpe oder Druckgasflasche, an den Testanschluss 11 angeschlossen. Beispielsweise kann ein Schlauch von der Testvorrichtung 13 zum Testanschluss 11 gelegt werden. Danach wird Testfluid mit einem vorbestimmten Testdruck an die Testleitung 10 anlegt, der beispielsweise über einem Druck im Kryobehälter 2 liegt. Gleichzeitig wird das Überdruckventil 8 beobachtet und es kann festgestellt werden, ob dieses auslöst und Testfluid auslässt. Das Überprüfen, ob das Überdruckventil 8 auslöst, kann entweder optisch erfolgen oder durch ein Manometer in der Testleitung 10, in der Anschlussleitung 5 zwischen Rückschlagventil 9 und Überdruckventil 8 oder in der Testvorrichtung 13. Lässt der durch das Manometer angezeigte Druck plötzlich nach bzw. bleibt dieser trotz einer gewünschten Druckerhöhung durch die Testvorrichtung 13 konstant, deutet dies auf ein Auslösen des Überdruckventils 8 hin. Auch kann auf der Atmosphärenseite des Überdruckventils 8 das Öffnen detektiert werden, beispielsweise durch Aufstecken eines Ballons oder Aufbringen eines Lecktest-Prüfschaums

Das von der Testvorrichtung 13 druckbeaufschlagte Testfluid kann beispielswies Luft, z.B. gefilterte oder ungefilterte Umgebungsluft, ein Fluid mit einer ähnlichen oder gleichen chemischen Zusammensetzung wie das im Kryobehälter 2 gelagerte Kryofluid 3 oder ein inertes Gas wie Stickstoff sein.

Der durch die Testvorrichtung 13 angelegte Druck kann entweder ein vorbestimmter, konstanter Druck sein, der beispielsweise im Bereich des nominellen Auslösedrucks bzw. des Schwellwerts des Überdruckventils 8 liegt, oder ein steigender Druck, beispielsweise ein konstant oder inkrementell steigender Druck. Durch einen steigenden Druck kann genau festgestellt werden, bei welchem Druck das Überdruckventil 8 auslöst.

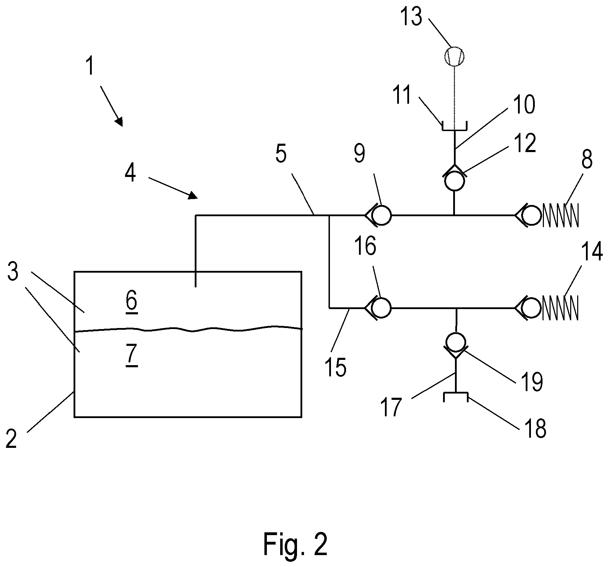

Figur 2 zeigt, dass aufgrund der Wichtigkeit der Sicherheitsfunktion des Überdruckventils 8 vorgesehen werden kann, ein zweites Überdruckventil 14 im System 1 anzuordnen, das bevorzugt bei einem anderen Schwellwert auslöst wie das erstgenannte Überdruckventil 8. Üblicherweise wird vorgesehen, dass das erste Überdruckventil 8 bei einem maximal zulässigen Arbeitsdruck auslöst, beispielsweise 16 bar, und das zweite Überdruckventil 14 bei einem Druck, der knapp unter einem Druck liegt, bei dem eine Schädigung des Kryobehälters 2 erwartet wird, beispielsweise 22 bar, wobei dieser Druck gegebenenfalls durch eine Norm vorgegeben sein kann. Der Schwellwert des zweiten Überdruckventils 14 liegt somit über dem Schwellwert des ersten Überdruckventils 8, und damit beispielsweise über dem maximal zulässigen Arbeitsdruck.

Hierfür wird eine weitere Anschlussleitung 15 vorgesehen, welche im zweiten Überdruckventil 14 mündet. Die Anschlussleitung 15 kann wie dargestellt an die erstgenannte Anschlussleitung 5 anschließen, beispielsweise zwischen der Anschlussstelle an den Kryobehälter 2 und dem erstgenannten Rückschlagventil 9, zwischen dem Rückschlagventil 9 und der Anschlussstelle der Testleitung 10 oder zwischen der Anschlussstelle der Testleitung 10 und dem ersten Überdruckventil 9. Alternativ könnte die weitere Anschlussleitung 15 unmittelbar in den Kryobehälter 2 geführt sein. Die weitere Anschlussleitung 15 kann ein Rückschlagventil 16 aufweisen, welches dazu ausgebildet ist, einen Fluidstrom in Richtung des zweiten Überdruckventils 14 zu ermöglichen und einen Fluidstrom in Richtung des Kryobehälters 2 zu verhindern. Es kann eine weitere Testleitung 17 vorgesehen werden, welche zwischen dem weiteren Rückschlagventil 16 und dem zweiten Überdruckventil 14 an die weitere Anschlussleitung 15 angeschlossen ist. Die weitere Testleitung 17 mündet in einem weiteren Testanschluss 18 und ein weiteres Ventil 19 ist in der Testleitung 17 angeordnet. Das weitere Ventil 19 ist dazu ausgebildet, einen Fluidstrom in Richtung des weiteren Testanschlusses 18 zu verhindern und einen Fluidstrom in Richtung des zweiten Überdruckventils 14 zu ermöglichen.

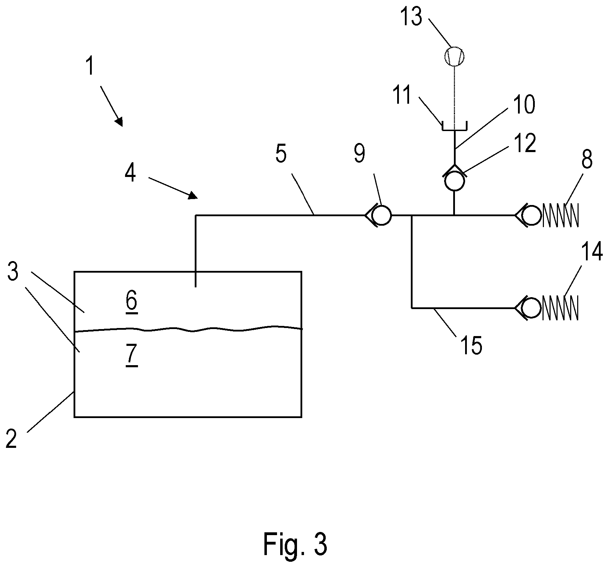

Weiters wäre wie in Figur 3 gezeigt möglich, keine weitere Testleitung 17 bzw. keinen weiteren Testanschluss 18 vorzusehen und die weitere Anschlussleitung 15 unmittelbar zwischen dem Rückschlagventil 9 und dem ersten Überdruckventil 8 an die Anschlussleitung 5 anzuschließen. Da nun beide Überdruckventile 8, 14 mit einer einzigen Testleitung 10 verbunden sind können beide Überdruckventile 8, 14 gleichzeitig überprüft werden, obwohl diese bei unterschiedlichen Drücken öffnen. Hierfür werden der Druck und der Durchfluss nach dem Öffnen des ersten Überdruckventils 8 weiter erhöht, bis auch das zweite Überdruckventil 14 öffnet, d.h. beide Überdruckventile 8, 14 gleichzeitig offen sind. Der jeweilige Auslösedruck kann entweder am Versorgungsdruckverlauf, Versorgungsmassenfluss, Versorgungsvolumenstrom festgestellt werden, beispielsweise an den jeweiligen Ballonen. Durch diese Anordnung kann ein Testanschluss eingespart werden. Dies kann analog bei der Ausführungsform von Figur 2 vorgesehen werden, wenn keine weitere Testleitung 17 bzw. kein weiterer Testanschluss 18 vorgesehen wird und die weitere Anschlussleitung 15 zwischen der Anschlussstelle an den Kryobehälter 2 und dem Rückschlagventil 9 an die Anschlussleitung 5 angeschlossen ist. Hierbei wird die Testleitung 10 sowohl zwischen dem ersten Überdruckventil 8 und dem Rückschlagventil 9 an die Anschlussleitung 5 als auch zwischen dem zweiten Überdruckventil 14 und dem weiteren Rückschlagventil 16 an die weitere Anschlussleitung 15 angeschlossen, wodurch eine gleichzeitige Überprüfung von beiden Überdruckventilen 8, 9 vorgenommen werden kann.

Für die Komponenten 15 - 20 und das Testverfahren für das zweite Überdruckventil 14 können alle Ausführungsvarianten eingesetzt werden, wie sie für das erste Überdruckventil 8 oben beschrieben wurden. Dadurch können die die beiden Überdruckventile 8, 14 gesondert und unabhängig voneinander, gegebenenfalls aber auch gleichzeitig, überprüft werden, ohne dass eines der Überdruckventile 8, 14 demontiert werden müsste.

Um den Kryobehälter 2 für kryogene Temperaturen (z.B. Temperaturen von unter 150 Kelvin) auszubilden, kann dieser einen Innentank und einen Außenbehälter aufweisen, wobei der Außenbehälter den Innentank vollständig mit Abstand umgibt und eine Vakuumisolation zwischen dem Außenbehälter den Innentank hergestellt ist. Eine derartige Konstruktion verhindert üblicherweise, dass Ventile oder ähnliches unmittelbar auf den Kryobehälter 2 bzw. den Außenbehälter montiert werden, da durch thermische Veränderungen bedingte Relativbewegungen zwischen dem Innentank und dem Außenbehälter auftreten können. Insbesondere wenn der Kryobehälter 2 an einem Fahrzeug montiert wird ist ein unmittelbares Anschrauben von Ventilen an den Kryobehälter 2 nicht möglich, da der zur Verfügung stehende Bauraum sehr beschränkt ist. Aus diesen Gründen wird zwischen die Anschlussleitung zwischen einer Anschlussstelle an den Kryobehälter 2 und dem Rückschlagventil zumindest teilweise, bevorzugt vollständig, als Rohrleitung ausgebildet, d.h. als steifes oder flexibles Rohr mit zylindrischem Querschnitt und Länge von beispielsweise mindestens 5 cm, mindestens 10 cm oder mindestens 20 cm. Die Rohrleitung kann beispielsweise von der Anschlussstelle an den Kryobehälter 2 zu einem Anschlussblock geführt sein, in dem die weiteren Leitungen insbesondere die Leitungen zwischen den Ventilen 8, 9 und 12 durch Bohrungen oder dergleichen ausgeführt sind. Dieser Anschlussblock könnte Anschlussöffnungen zum Einsetzen der Ventile 8, 9 und 12 (gegebenenfalls auch 14, 16, 19) aufweisen. Alternativ könnten auch Rohrleitungen zwischen allen Ventilen 8, 9 und 12 (gegebenenfalls auch 14, 16, 19) und der Anschlussstellle zum Kryobehälter 2 vorgesehen werden.

Wenn ein Anschlussblock eingesetzt wird, wird überdies bevorzugt, wenn das Überdruckventil 8, 14 zumindest teilweise im Anschlussblock verwirklicht ist. Das Überdruckventil 8, 14 besteht üblicherweise aus einem Ventilkörper, einem Federelement und dem Ventilkopf, der mittels des Federelements gegenüber dem Ventilkörper vorgespannt ist und Fluid bei Erreichen eines vorbestimmten Überdrucks ausgibt. Üblicherweise wird der Ventilkörper auf eine Rohrleitung oder ähnliches geschraubt. Bevorzugt ist jedoch, wenn der Ventilkörper als Teil des Anschlussblocks ausgeführt ist, d.h. es wird lediglich das Federelement und der Ventilkopf auf dem Anschlussblock montiert, um das Überdruckventil zu bilden. Wenn der Anschlussblock z.B. eine Anschlussöffnung für eine Rohrleitung zur Verbindung mit dem Kryobehälter bzw. ein internes T-Stück zum Anschluss der Testleitung und/oder Anschlüsse für Ventile 9, 12, 16, 19 umfasst, kann eine besonders kompakte Einheit geschaffen werden.

## Patentansprüche

1. System (1) umfassend einen Kryobehälter (2) zur Lagerung von Kryofluid (3) und ein Anschlusssystem (4) mit zumindest einer mit dem Kryobehälter (2) verbundenen Anschlussleitung (5), welche in einem Überdruckventil (8) mündet,
wobei ein Rückschlagventil (9) in der Anschlussleitung (5) vorgesehen ist, welches dazu ausgebildet ist, einen Fluidstrom in Richtung des Kryobehälters (2) zu verhindern,
wobei das System (1) ferner eine Testleitung (10) umfasst, welche zwischen dem Rückschlagventil (9) und dem Überdruckventil (8) an die Anschlussleitung (5) anschließt und in einem Testanschluss (11) für eine Testvorrichtung (13) zur Bereitstellung eines druckbeaufschlagten Testfluids mündet, wobei ein Ventil (12) in der Testleitung (10) vorgesehen ist, welches dazu ausgebildet ist, einen Fluidstrom in Richtung des Testanschlusses (11) zu verhindern und einen Fluidstrom in Richtung des Überdruckventils (8) zu ermöglichen, um dessen Funktionstüchtigkeit zu überprüfen, wobei das Ventil (12) ein Rückschlagventil oder ein Quetschventil ist.

2. System (1) nach Anspruch 1, wobei der Auslösedruck des Überdruckventils (8) über dem maximal zulässigen Arbeitsdruck des Kryobehälters (2) liegt.

3. System (1) nach Anspruch 1 oder 2, wobei eine weitere Anschlussleitung (15) an die erstgenannte Anschlussleitung (5) angeschlossen ist, wobei die weitere Anschlussleitung (15) in einem zweiten Überdruckventil (14) mündet, das bevorzugt bei einem anderen Auslösedruck als das erstgenannte Überdruckventil (8) auslöst.

4. System (1) nach Anspruch 3, wobei ein zweites Rückschlagventil (16) in der weiteren Anschlussleitung (15) vorgesehen ist, welches dazu ausgebildet ist, einen Fluidstrom in Richtung des Kryobehälters (2) zu verhindern, wobei das System (1) ferner eine weitere Testleitung (17) umfasst, welche zwischen dem weiteren Rückschlagventil (16) und dem zweiten Überdruckventil (14) an die weitere Anschlussleitung (15) anschließt und in einem weiteren Testanschluss (18) für die Testvorrichtung (13) oder eine weitere Testvorrichtung zur Bereitstellung des genannten oder eines weiteren druckbeaufschlagten Testfluids mündet, wobei ein weiteres Ventil (19) in der weiteren Testleitung (17) vorgesehen ist, welches dazu ausgebildet ist, einen Fluidstrom in Richtung des weiteren Testanschlusses (18) zu verhindern und einen Fluidstrom in Richtung des zweiten Überdruckventils (14) zu ermöglichen, um dessen Funktionstüchtigkeit zu überprüfen.

5. System (1) nach Anspruch 3, wobei die Testleitung (10) auch an die weitere Anschlussleitung (15) anschließt oder die weitere Anschlussleitung (15) zwischen dem Rückschlagventil (9) und dem erstgenannten Überdruckventil (8) an die erstgenannte Anschlussleitung (5) anschließt.

6. System (1) nach einem der Ansprüche 1 bis 5, wobei die Anschlussleitung (5) zwischen einer Anschlussstelle an den Kryobehälter (2) und dem Rückschlagventil (9) zumindest teilweise, bevorzugt vollständig, als Rohrleitung ausgebildet ist.

7. System (1) nach einem der Ansprüche 1 bis 6, der Kryobehälter (2) einen Innentank und einen Außenbehälter aufweist, wobei der Außenbehälter den Innentank vollständig mit Abstand umgibt und eine Vakuumisolation zwischen dem Außenbehälter den Innentank hergestellt ist, wobei die Anschlussleitung (15) sowohl den Innentank als auch den Außenbehälter durchsetzt.

8. Fahrzeug, umfassend ein System (1) nach einem der Ansprüche 1 bis 7, wobei der Kryobehälter (2) bevorzugt auf einem Fahrzeugrahmen des Fahrzeugs montiert ist.

9. Verfahren zum Überprüfen der Funktionstüchtigkeit des Überdruckventils (8) in einem System (1) nach einem der Ansprüche 1 bis 8, wobei die Testvorrichtung (13) an den Testanschluss (11) angeschlossen wird und Testfluid mit einem Testdruck an die Testleitung (10) anlegt.

10. Verfahren nach Anspruch 9, wobei die Testvorrichtung (13) das Testfluid mit einem steigenden, bevorzugt stetig steigenden, Druck an die Anschlussleitung anlegt und der Druck aufgezeichnet wird, an dem das Überdruckventil (8) auslöst.

11. Verfahren nach Anspruch 9 oder 10, wobei das Testfluid inertes Gas ist, bevorzugt Stickstoff.

## Claims

1. A system (1) comprising a cryogenic vessel (2) for storing cryogenic fluid (3) and a connection system (4) with at least one connecting line (5) connected to the cryogenic vessel (2), which terminates in a pressure relief valve (8),
wherein a check valve (9) is provided in the connecting line (5), which is designed to prevent fluid flow toward the cryogenic vessel (2), wherein the system (1) further comprises a test line (10) that connects to the connecting line (5) between the check valve (9) and the pressure relief valve (8) and opens into a test port (11) for a test device (13) for supplying a pressurized test fluid, wherein a valve (12) is provided in the test line (10), which is configured to prevent fluid flow toward the test port (11) and to allow fluid flow toward the relief valve (8) in order to verify its functionality, wherein the valve (12) is a check valve or a pinch valve.

2. System (1) according to claim 1, wherein the trigger pressure of the pressure relief valve (8) is above the maximum permissible operating pressure of the cryogenic vessel (2).

3. System (1) according to claim 1 or 2, wherein a further connecting line (15) is connected to the first-mentioned connecting line (5), wherein the further connecting line (15) terminates in a second pressure relief valve (14) that preferably relieves at a different set pressure than the first-mentioned pressure relief valve (8).

4. System (1) according to claim 3, wherein a second check valve (16) is provided in the additional connecting line (15), which is designed to prevent fluid flow toward the cryogenic vessel (2), wherein the system (1) further comprises a further test line (17), which connects to the further connecting line (15) between the further check valve (16) and the second pressure relief valve (14) and opens into a further test port (18) for the test device (13) or a further test device for supplying said or a further pressurized test fluid, wherein a further valve (19) is provided in the further test line (17), which is configured to prevent fluid flow toward the further test port (18) and to allow fluid flow toward the second relief valve (14) in order to verify its operability.

5. System (1) according to claim 3, wherein the test line (10) also connects to the additional connecting line (15), or the additional connecting line (15) connects the first-mentioned connecting line (5) between the check valve (9) and the first-mentioned pressure relief valve (8).

6. System (1) according to any one of claims 1 through 5, wherein the connecting line (5) between a connection point on the cryogenic vessel (2) and the check valve (9) is at least partially, preferably completely, formed as a pipe line.

7. System (1) according to any one of claims 1 through 6, the cryogenic vessel (2) comprises an inner tank and an outer container, wherein the outer container completely surrounds the inner tank with a gap, and a vacuum insulation is established between the outer container and the inner tank, wherein the connecting line (15) passes through both the inner tank and the outer container.

8. Vehicle comprising a system (1) according to any one of claims 1 through 7, wherein the cryogenic vessel (2) is preferably mounted on a vehicle frame of the vehicle.

9. A method for testing the functionality of the pressure relief valve (8) in a system (1) according to any one of claims 1 through 8, wherein the test device (13) is connected to the test port (11) and applies test fluid at a test pressure to the test line (10).

10. The method according to claim 9, wherein the test device (13) applies the test fluid to the connecting line at an increasing, preferably continuously increasing, pressure, and the pressure at which the pressure relief valve (8) opens is recorded.

11. A method according to claim 9 or 10, wherein the test fluid is an inert gas, preferably nitrogen.

## Revendications

1. Système (1) comprenant un réservoir cryogénique (2) destiné au stockage d'un fluide cryogénique (3) et un système de raccordement (4) comportant au moins une conduite de raccordement (5) reliée au réservoir cryogénique (2), laquelle débouche dans une soupape de surpression (8),
un clapet anti-retour (9) étant prévu dans la conduite de raccordement (5), lequel est conçu pour empêcher un écoulement de fluide en direction du réservoir cryogénique (2),
dans lequel
le système (1) comprend en outre une conduite de test (10) qui est raccordée à la conduite de raccordement (5) entre le clapet anti-retour (9) et la soupape de surpression (8) et débouche dans un raccord de test (11) destiné à un dispositif de test (13) pour fournir un fluide de test sous pression, une vanne (12) étant prévue dans la conduite de test (10), laquelle est conçue pour empêcher un écoulement de fluide en direction du raccord de test (11) et pour permettre un écoulement de fluide en direction de la soupape de surpression (8) afin de vérifier son bon fonctionnement, la vanne (12) étant un clapet anti-retour ou une vanne à pincement.

2. Système (1) selon la revendication 1, dans lequel la pression de déclenchement de la soupape de surpression (8) est supérieure à la pression de service maximale admissible du réservoir cryogénique (2).

3. Système (1) selon la revendication 1 ou 2, dans lequel une autre conduite de raccordement (15) est raccordée à la première conduite de raccordement (5), ladite autre conduite de raccordement (15) débouchant dans une deuxième soupape de surpression (14) qui s'ouvre de préférence à une pression de déclenchement différente de celle de la première soupape de surpression (8).

4. Système (1) selon la revendication 3, dans lequel un deuxième clapet anti-retour (16) est prévu dans la conduite de raccordement supplémentaire (15), lequel est conçu pour empêcher un écoulement de fluide en direction du réservoir cryogénique (2), le système (1) comprend en outre une autre conduite de test (17) qui relie la conduite de raccordement supplémentaire (15) entre le deuxième clapet anti-retour (16) et la deuxième soupape de surpression (14) et qui débouche dans un autre raccord d'essai (18) destiné au dispositif de test (13) ou à un autre dispositif d'essai pour fournir ledit fluide d'essai sous pression ou un autre fluide d'essai sous pression, une autre vanne (19) étant prévue dans l'autre conduite de test (17), laquelle est conçue pour empêcher un écoulement de fluide en direction de l'autre raccord d'essai (18) et pour permettre un écoulement de fluide en direction de la deuxième soupape de surpression (14) afin de vérifier son bon fonctionnement.

5. Système (1) selon la revendication 3, dans lequel la conduite de test (10) est également raccordée à l'autre conduite de raccordement (15) ou l'autre conduite de raccordement (15) est raccordée à la première conduite de raccordement (5) entre le clapet anti-retour (9) et la première soupape de surpression (8) mentionnée.

6. Système (1) selon l'une des revendications 1 à 5, dans lequel la conduite de raccordement (5) est réalisée, entre un point de raccordement au réservoir cryogénique (2) et le clapet anti-retour (9), au moins en partie, de préférence entièrement, sous la forme d'une canalisation.

7. Système (1) selon l'une des revendications 1 à 6, dans lequel le réservoir cryogénique (2) comporte un réservoir intérieur et un réservoir extérieur, le réservoir extérieur entourant entièrement le réservoir intérieur en laissant un espace entre eux et une isolation sous vide étant établie entre le réservoir extérieur et le réservoir intérieur, la conduite de raccordement (15) traversant à la fois le réservoir intérieur et le réservoir extérieur.

8. Véhicule comprenant un système (1) selon l'une des revendications 1 à 7, le réservoir cryogénique (2) étant de préférence monté sur un châssis du véhicule.

9. Procédé de vérification du bon fonctionnement de la soupape de surpression (8) dans un système (1) selon l'une des revendications 1 à 8, dans lequel le dispositif de test (13) est raccordé au raccord de test (11) et applique un fluide de test à une pression de test à la conduite de test (10).

10. Procédé selon la revendication 9, dans lequel le dispositif de test (13) applique le fluide d'essai à la conduite de raccordement sous une pression croissante, de préférence croissante de manière continue, et la pression à laquelle la soupape de surpression (8) s'ouvre est enregistrée.

11. Procédé selon la revendication 9 ou 10, dans lequel le fluide d'essai est un gaz inerte, de préférence de l'azote.
